(19) Europäisches Patentamt / European Patent Office / Office européen des brevets

(11) **EP 4 189 294 B1**

(12) **EUROPEAN PATENT SPECIFICATION**

(45) Date of publication and mention
of the grant of the patent:
**25.12.2024  Bulletin 2024/52**

(21) Application number: **21742431.6**

(22) Date of filing: **16.07.2021**

(51) International Patent Classification (IPC):
**F24D 17/00** *(2022.01)*    **F24D 17/02** *(2006.01)*
**F24D 19/10** *(2006.01)*    **F24D 11/02** *(2006.01)*

(52) Cooperative Patent Classification (CPC):
**F24D 17/0057; F24D 11/0228; F24D 11/0235;**
**F24D 17/02; F24D 19/1039; F24D 19/1051;**
F24D 2200/12; F24D 2200/16; F24D 2200/18;
F24H 2240/12; Y02B 10/70; Y02B 30/18;
Y02B 30/52; Y02P 80/10

(86) International application number:
**PCT/EP2021/070021**

(87) International publication number:
**WO 2022/023085 (03.02.2022 Gazette 2022/05)**

(54) **AN ENERGY SYSTEM FOR SUPPLY OF HOT WATER**

ENERGIESYSTEM ZUR WARMWASSERVERSORGUNG

SYSTÈME D'ÉNERGIE POUR L'ALIMENTATION EN EAU CHAUDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.07.2020  EP 20188179**

(43) Date of publication of application:
**07.06.2023  Bulletin 2023/23**

(73) Proprietor: **ACTIONZERO ESCOPOD LIMITED
Cork, T23 KW81 (IE)**

(72) Inventors:
  • **FLYNN, Liam
    Cork (IE)**
  • **O'LEARY, John
    Kerry (IE)**

(74) Representative: **Weldon O'Brien Ltd.
    Shannon Lodge
    Casement Road
    Bandon
    County Cork, P72 TN24 (IE)**

(56) References cited:
    WO-A1-2011/116736    WO-A1-2012/086033
    WO-A1-2016/166893    AT-A1- 507 709
    DE-A1- 19 740 398

**Description**

Introduction

The invention relates to an energy system for premises which require substantial volumes of water heated, possibly to a variety of temperatures, and possible also electrical power, and which may also require refrigeration, cooling or chilling.

Heating water can be done through a variety of means. Boilers are an energy conversion technology with Co-efficient of Performance ("COP") of always less than 1. As fuel costs increase, the cost of heating increases proportionately.

Vapour compression heat pumps are a heat transfer technology with a COP of typically greater than 1, which degrades with increasing compression ratio. The compression ratio, and therefore efficiency, is adversely affected by reducing source temperature, and by increasing water leaving temperature requirement. They are more efficient at lower compression ratios.

CHP ("combined heat and power", and otherwise known as "cogeneration" systems) have a COP of less than 1 and require a "spark gap" of a certain magnitude to realise cost-efficiency. As the spark gap narrows, the CHP becomes less cost efficient.

Trigeneration is a variant of cogeneration, in which the heat output of cogeneration is used to drive an absorption chilling system that delivers chilling as an output. One of the outputs of the cogeneration component is therefore consumed or part consumed to deliver the third output, via a chiller with a COP of less than 1.

WO2012/086033 (Hitachi Ltd.), DE19740398 ( VNG VERBUNDETZ GAS AG), and AT507709 (VKR Holdings AS) describes systems in this field.

An objective of the invention is to improve efficiency in provision of hot water for environments such as a food processing factory, linen washing plant, hospital, hotel, pharma, or similar users of hot water.

Summary of the Disclosure

The invention provides an energy system as set out in claim 1, and other aspects are described in claims 2 to 8. The invention also provides a method of operation of an energy system as set out in claim 9, and other aspects of the method are set out in claims 10 to 12.

Detailed Description of the Invention

The invention will be more clearly understood from the following description of some embodiments thereof, given by way of example only with reference to the accompanying drawings in which:

Fig. 1 is plant diagram illustrating an energy system of the invention; and

Fig. 2 is a diagram showing the plant with parameter values indicated for an alternative method of use.

We describe an energy system which supplies water at different temperature levels for various purposes. A major example of application of the system is a food processing plant with different load circuits each for a different purpose such as washing and process water. The system in some examples the system also supplies electrical power. It provides these supplies in a real time manner on-demand in a manner which minimises energy input and hence minimises $CO_2$ generated. The system is controlled by a digital controller linked as is known in the art for process automation. Links from the controller are either wired or wireless.

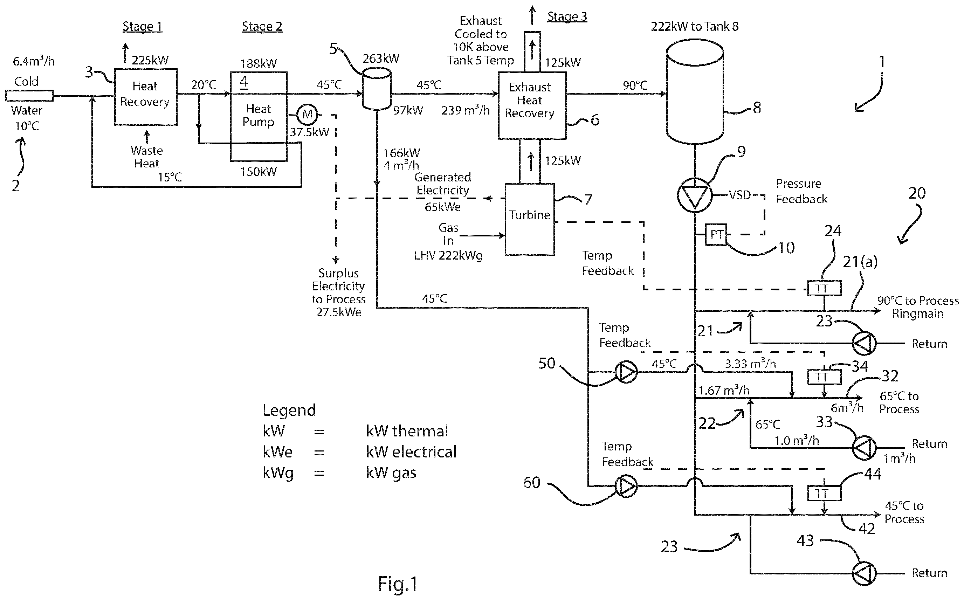

Referring to Fig. 1 an energy system 1 has a hot water tank 8 which holds water at a high temperature, say 90°C, in some cases with a margin above to allow for small losses. The energy for this comes from a third stage, Stage 3, which includes an exhaust heat exchanger 6 of a gas turbine 7, the output of which also generates electrical energy for a heat pump 4 of a second stage, Stage 2. The water from the high temperature tank 8 is fed on a high temperature line with a pump 9 to a set of supply circuits 20. A first stage, Stage 1, recovers waste heat from equipment to elevate temperature of a cold water supply for the heat pump of Stage 2, thereby significantly improving efficiency of the heat pump 6.

In more detail, the energy system 1 heats ambient temperature water to a high temperature, say 90°C, in various stages with each stage contributing to a given temperature rise. Stage 1 comprises a heat recovery heat exchanger ("HX") 3 that heats ambient water for process use to say 20°C, using freely available waste heat. This process stream is further heated in additional stages. This HX 3 may have a second function, to contribute an additional water stream at 20°C to act as a source for Stage 2, when Stage 2 comprises a water source heat pump 4. The efficiency of Stage 2 is elevated because of receiving a warmer source than ambient. Once source heat is extracted from this water stream, it is recirculated to the heat recovery HX 3 for reheating. Stage 2 may also use as its source a chilling circuit, or cooling tower circuit, or other waste water source, or it may be an air source heat pump, or a refrigeration compressor. The process component flows onward to the heat sink, or condenser, of the heat pump 4 used as Stage 2 heating, to elevate the temperature of the process water stream to say, 45 °C, and is conveyed to a low temperature tank 5. Some of this 45°C water may be used directly in the process and the remainder is used as the low temperature component for blending in the supply circuits 20.

A controlled output temperature from the heat pump 4 is preferably adjustable downwards to increase coefficient of performance ("COP") of the heat pump.

Stage 3 receives the 45°C water from the tank 5 and includes the turbine flue HX 6 which elevates the process flow to 90°C and feeds a high temperature storage tank 8 arranged to deliver water on a high temperature (90°C) line 9 to the supply circuits 20. The low temperature (LT) storage tank 5 may be arranged to deliver lower temperature (45°C) water on a LT line 50, 60 to the supply circuits 20. A number of the supply circuits 20 are each arranged to receive high temperature ("HT") water, receive LT water, and blend these flows to deliver a process water supply at a desired high, low or intermediate temperature (65°C) in an outlet line 21(a), 32, 42.

A high temperature circuit 21 receives water directly from the HT line 9, and the temperature may be diluted by the cooling effect of a return pump 23, which will have a relatively small effect. The outlet temperature from flue HX 6 may be controlled and increased to compensate for this cooling effect to ensure that the required flow temperature is met. This control is achieved by feedback from a temperature sensor 24, resulting in the controller controlling the turbine 7 accordingly as indicated by the interrupted line from 24 to 7.

In each supply circuit where the required water temperature is lower than the HT supply temperature, the blending may for example be controlled by control of blending pumps 50, 60 according to temperature of the process outlet (32, 42).

The number and capacity of turbines selected determines the base heating capacity. For example, one turbine may heat 0.66 kg/s of water from 45°C to 90°C. This same flow rate is heated upstream, from 10°C to 20°C (Stage 1), and 20°C to 45°C (Stage 2), as described in more detail below, with the capacity of Stages 1 and 2 being increased in proportion with the increased capacity of Stage 3. Other particular process factors may allow the proportional increase to be varied. The capacity of Stages 1 and 2 will also include the additional heating requirements of the 45°C flow to blending and/or direct to process.

The water supply 2 is either direct from mains or a holding tank, and its temperature is typically about 10°C. This cold supply water is delivered to the heat recovery HX 3 which recovers heat from various refrigeration and air conditioning systems in the plant in which the system 1 is installed. So, its primary energy input is waste heat. The Stage 1 HX 3 comprises a plate heat exchanger, or other heat exchanger appropriate to the waste heat stream, with pump and control valves.

As an example, the flow rate of supply water to the heat recovery HX 3 may be 6.4 m³/hr. The HX 3 is rated at 225kW, of which 75kW is pre-heat energy to the received water, raising its temperature to about 20 °C, and the remaining 150 kW is used to deliver source heat to the Stage 2 heat pump 4.

In an example, water is heated from 10°C to 20°C, using low grade heat recovered in the HX 3 from the relevant industrial process, and this pre-heats additional water that is used as a source for the heat pump 4. The heat pump may alternatively be an air source heat pump, or it may use cooling tower water from an external chiller system, or use the chilling duty itself, as source.

The output water of the heat recovery HX 3, elevated to 20°C, is fed to the heat pump 4. This adds 188kW of energy to the water, bringing its temperature up to 45°C, meaning that energy of 263 kW is delivered to the LT water tank 5.

A scaling factor applied to the heat pump 4 allows additional 45°C water to be produced for direct use in the process, and for blending with 90°C to produce, for example, wash water at a desired intermediate temperature.

In this example there are three process supply circuits 21, 22 and 23, each of which receives an input from the high temperature tank 8 via the pump 9. This pump is controlled according to pressure at its outlet to the blending circuits 20. The system controller therefore controls the delivery flow rate of HT water in real time according to overall demand in the supply circuits 20, which deliver water to the plant at the desired temperature and flow rates. Each circuit 21, 22, and 23 is for a particular process water system such as hand washing, plant washing, or meat treatment, and may be a ring main system with water constantly flowing in the circuit to ensure that temperature stagnation at periods of low use does not occur. Return pumps 23, 33, 43 are employed to effect this.

The circuit 21 has an outlet line 21(a), a temperature sensor 34, a return line 23 with a return pump. The temperature of the outlet line 22 is controlled as the output temperature of the Stage 3 heating system, being the turbine 7, and the heat exchanger 6.

The circuit 22 has an outlet 32, return pump 33, a temperature sensor 34, and a blending pump 50 controlled according to temperature feedback from a temperature sensor 34. The circuit 23 has an outlet 42, a return pump 43, a temperature sensor 44, and a blending pump 60 controlled according to temperature feedback from the sensor 44.

In this example the circuits 21, 22, and 23 provide water at 90°C, 65°C, and 45°C respectively. However, these values may be varied by control of the pumps, 50, 60, and the outlet temperature of Stage 3. Also, the components feeding the tank 8 are controlled according to the highest desired temperature from the supply circuits. In this case the highest level is 90°C, and accordingly the HX 6 is controlled in real time to deliver water at the required elevated temperature so that the circuit 22 can maintain the water at a consistent level of 90°C as measured by the sensor 24. This is to overcome the slight cooling effect of the return flow 23.

Returning to the energy flows, the turbine 7 exhaust flue provides 125 kW, which is added to the 45°C water in order to deliver the 90°C to the tank 8. The turbine 7 receives 222kWg of energy from the gas, delivering 125 kW to the heat exchanger 6 and 65kW in electrical power to the heat pump 4. In this example this electrical power is split into 37.5 kW to the heat pump and 27.5kW to the process.

Overall, the primary energy inputs are the gas supply to the turbine 7 and the waste heat into the heat recovery HX 3. The system 1 captures low grade heat from the plant and uses this free energy to raise the temperature into the heat pump 4, thereby reducing its compression ratio. This initially-heated water may also be used to provide water to a process which uses water at this relatively low temperature. Hence the tank 5 is filled in an inexpensive way and which contributes little carbon dioxide generation. This tank directly supplies the blending, process water, circuits 20 via variable speed drive (VSD) pumps 50 and 60. This water may be used directly as in the circuit 23, or as a blending input as for the circuit 22. There is therefore optimum use of energy, with very little waste due to the real time control of the components to optimise the temperature in the tank 8 (according only to the maximum required at the circuit 21.

The following is an example energy profile.

| | Energy Inputs (kW) | | |
|---|---|---|---|
| | Waste heat:- | | |
| | Pre-heat | 75 | |
| | Source | 150 | |
| | | | 225 |
| | Gas | | 222 |
| | | | 447 |
| | | | |
| | Energy Outputs (kW) | | |
| | Heat | | |
| Stage 1 | Pre-heat | 75 | |
| Stage 2 | Heat Pump | 188 | |
| Stage 3 | Turbine | 125 | |
| | | | 388 |
| | Electricity (net) | | 27 |
| | | | 415 |
| | | | |
| | Losses (kW) | | 32 |

COP (Purchased (Imported) Energy Input / Useful Energy output) = 222/415 = 1.87

$CO_2$ savings may be calculated as follows:
Grid electricity replaced: (27.5kWe/45.2) x 100 = 60.8 kW

Thermal

Boiler at 80% nominal efficiency:

$$(388kW/80) \text{ x } 100 = 485 \text{ kW}$$

$$Sum = 545.8 \text{ kW}$$

There is a gas fuel input to the system 1 of 222kW, replacing a prime energy input of 545.8kW, yielding a saving of 323.8 kW of prime energy. Assuming a natural gas fuelled boiler, this equates to a saving of about 66.28 kg/hr $CO_2$.

Overall, the system 1 has excellent energy efficiency due to the manner in which waste heat is utilized, being recovered to preheat process water and also to elevate temperature of a cold water supply to optimize efficiency of a heat pump, which in turn feeds the low temperature storage tank used by the supply circuits for blending, and to preheat the process flow to the Flue heat exchanger 6.

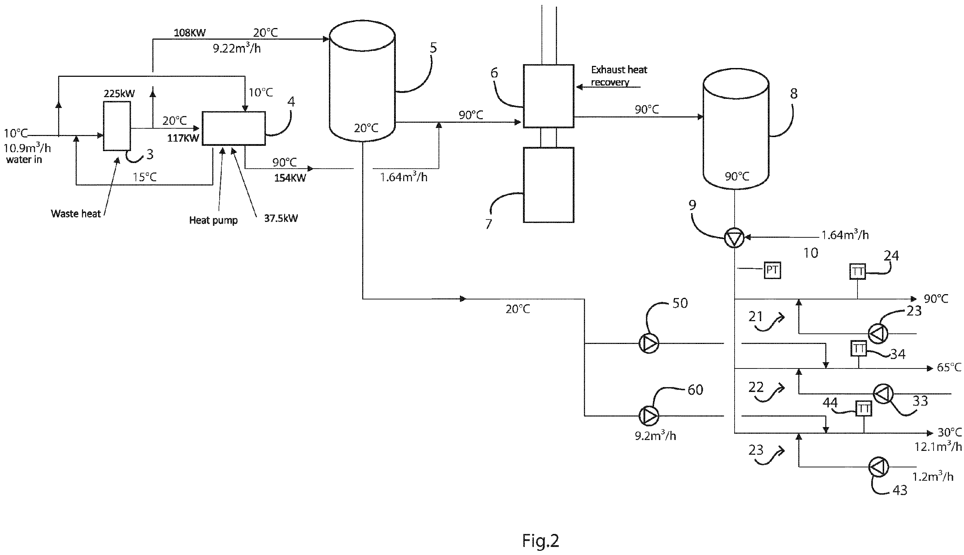

Alternative Methods of Operation (Fig. 2)

The system may be operated using only the heat pump 4 to provide the high temperature water, bypassing the turbine 6 and using electricity from the grid to operate the heat pump. Such grid power is preferably from carbon-neutral sources such as wind power. This is shown in Fig. 2. In this example the heat pump 4 provides a flow of water at 90°C and the low temperature tank 5 is fed directly from the Stage 1 heat exchanger 3, at about 20 °C in this example.

The water blending increases overall operating system efficiency by recovering energy from the heat pump and advantageous use of waste heat. This is achieved by supplying the lowest temperature water, about 10 °C, to recover the condensing and subcooling energy from the heat pump to maximize its COP. The higher the supply temperature process water to be heated by the heat pump the lower the COP, as less subcooling can be recovered.

Heat recovery is used as a heat source for the heat pump 4 and the low temperature tank 5. For the heat pump 4 there is 10 °C in and 90 °C out which by-passes the tank 5 and fills the high temperature tank 8 with a piping configuration. This low-grade waste heat which can be 20 °C or more is injected to the blending circuits 22 and 23 by the blending system pumps 50 and 60 controlled by TT-34 and TT-44. The pump 9 operates at a reduced speed controlled by PT 10, and less energy will be required from the tank 8. When operating in this mode maximum kW energy and efficiency is delivered from the heat pump 4 and the waste heat HX 3. The blending can utilise waste heat at temperature above 10 °C which would in other prior systems be dumped to atmosphere.

Operating in this mode the invention overall COP is increased, and there is no burning of fossil fuels if the grip-provided power is by wind source.

Example Scenarios

Heat recovery Stage 1 225KW: 108 kW to tank 5 water in 10 °C, water out 20 °C, flow 9,281 litres/hr (L/h).
117kW source to heat pump 37.5kWe required
Heat pump output 117kW + 35.5kW =150kW, water in 10 °C, water out 90 °C, flow 1648 litres.
New flow rate 10,929 L/h
Energy delivered: 108 KW-150KW = 258KW, operating power 37.5KW
Overall COP 6.88.
Heat recovery Stage 1 225KW 50kW to tank 5, water in 10 °C, water out 20 °C, flow 4,296L/h, 117kW source to heat pump, 37.5kWe required.
Heat pump output 117kW + 35.5kW = 150kW water in 10 °C water out 90 °C flow 1648 L/h. New flow rate 5,944L/h.
Energy delivered: 50KW+150KW = 200KW, operating power 37.5KW
Overall COP 5.3.
Heat recovery Stage 1 225KW, 10kW to tank 5, water in 10°C, water out 20 °C, flow 859L/h, 117kW source to heat pump 37.5kWe required
Heat pump output 117kW + 35.5kW =150kW, water in 10 °C, water out 90 °C, flow 1648L/h New flow rate 2,507L/h.
Energy delivered: 10KW + 50KW = 160KW operating power 37.5KW.
Overall COP 4.46.

It will be appreciated that the system delivers reliable temperature and flow to process with a variable flow demand, whilst maintaining the required temperatures. Also, it avoids the need for delivery-side heat exchangers and therefore avoids potential for fouling.

Also, it will be appreciated that the reduced temperature from the heat pump, being the temperature on to the turbine heat exchanger 6, allows additional heat to be extracted from the flue gas flow from the turbine, thus increasing the efficiency of Stage 3.

Advantageously, the system 1 is arranged so that the quality, or temperature, of the heat source is matched to the temperature requirement to optimise the efficiency of each stage.

The invention is not limited to the embodiments described but may be varied in construction and detail within the scope of the claims.

**Claims**

**1.** An energy system comprising:

a high temperature line (9), a high temperature water heater (6,7) and a high temperature storage tank (8) arranged to deliver hot water on the high temperature line (9),
a a low temperature line (50,60), a heat pump (4) and a low temperature storage tank (5) arranged to deliver lower temperature water on the low temperature line (50, 60), a plurality of hot water supply circuits (20) each comprising a corresponding outlet line (21a,32,42) and each arranged to

receive high temperature water from the high temperature line (9),
receive low temperature water from the low temperature line (50, 60), and deliver a process water supply at a desired high, low, or intermediate temperature in said corresponding outlet line (21(a), 32, 42), in which a supply circuit (22, 23) delivering water at an intermediate temperature is arranged to blend the high temperature and low temperature flows; and

a controller configured to control the system, wherein the controller is configured to control the water heater (6,7) and the blending in real time,
**characterized in that**:

the system comprises a pump in the high temperature line (9) for delivering high temperature water to the supply circuits (20), and the controller is configured to control said pump according to sensed pressure between said pump and the supply circuits (20),
at least one supply circuit of said supply circuits (22, 23) comprises a low temperature line pump in said low temperature line (50, 60), and the controller is configured to control said low temperature line pump according to sensed temperature in the supply circuit outlet line (32, 42) to achieve a desired level of blending, and the controller is configured to control the low temperature line pump to dynamically control blending of water from the high temperature line (9), the low temperature line (50,60) and a return line (43) to provide process water,
the high temperature water heater comprises a gas turbine (7) and a flue gas heat exchanger (6), said heat exchanger being arranged to heat water for delivery to the high temperature storage tank (8),
the turbine (7) is arranged to provide electrical energy for the heat pump (4), either directly or indirectly, with surplus generated electricity being provided for a process.

**2.** An energy system as claimed in claim 1, wherein said at least one supply circuit of said supply circuits (22,23) comprises said return line (43).

**3.** An energy system as claimed in claim 1 or claim 2, wherein at least one supply circuit (21) receives water only from the high temperature line (9).

**4.** An energy system as claimed in claim 3, wherein said at least one supply circuit (21) comprises a temperature sensor (24) in its outlet, and the controller is configured to control the high temperature water heater (7, 6) according to temperature sensed by said circuit.

**5.** An energy system as claimed in any preceding claim, wherein the system comprises a heat recovery heat exchanger (3) arranged to recover heat from external process equipment.

**6.** An energy system as claimed in claim 5, wherein the heat recovery heat exchanger (3) is arranged to heat a cold water supply to a higher temperature level provided to the heat pump (4), so that the heat pump can operate at a lower compression ratio than if it received the cold water supply

**7.** An energy system as claimed in claim 6, wherein the heat pump (4) is arranged to feed back water to the heat recovery heat exchanger (3) inlet.

**8.** An energy system as claimed in any preceding claim, wherein a controlled output temperature from the heat pump (4) is adjustable downwards to increase coefficient of performance COP of the heat pump.

**9.** A method of operation of an energy system as claimed in any preceding claim the method comprising the steps of:
the high temperature water heater (6,7) and the high temperature storage tank (8) delivering hot water on the high temperature line (9), the heat pump (4) and the low temperature storage tank (5) delivering lower temperature water on the low temperature line (50, 60), each of the hot water supply circuits (20:

    receiving high temperature water from the high temperature line,
    receiving low temperature water from the low temperature line, and
    delivering (21(a), 32, 42) a process water supply at a desired high, low, or intermediate temperature in a corresponding outlet line, in which a supply circuit (22,23) delivers water at an intermediate temperature by blending the high temperature and low temperature flows.

**10.** A method as claimed in claim 9, wherein the system comprises a heat recovery heat exchanger (3) which recovers heat from external process equipment to heat a cold water supply (2) to a higher temperature level provided to the heat pump (4), so that the heat pump operates at a lower compression ratio than if it received the cold water supply.

**11.** A method as claimed in claim 10, wherein the heat pump (4) feeds back water to the heat recovery heat exchanger (3) inlet.

**12.** A method as claimed in any of claims 9 to 11, wherein a controlled output temperature from the heat pump (4) is adjusted downwards to increase coefficient of performance COP of the heat pump.

**Patentansprüche**

**1.** Energiesystem, umfassend:

    eine Hochtemperatur-Leitung (9), einen Hochtemperatur-Warmwasserbereiter (6, 7) und einen Hochtemperatur-Speichertank (8), die dazu eingerichtet sind, Warmwasser über die Hochtemperatur-Leitung (9) zu leiten,
    eine Tieftemperatur-Leitung (50, 60), eine Wärmepumpe (4) und einen Tieftemperatur-Speichertank (5), die dazu eingerichtet sind, Wasser mit einer tieferen Temperatur über die Tieftemperatur-Leitung (50, 60) zu leiten,
    eine Vielzahl von Warmwasserversorgungskreisläufen (20), die je eine entsprechende Auslassleitung (21a, 32, 42) umfassen und je dazu eingerichtet sind, Wasser mit einer hohen Temperatur aus der Hochtemperatur-Leitung (9) aufzunehmen, Wasser mit einer tiefen Temperatur aus der Tieftemperatur-Leitung (50, 60) aufzunehmen und eine Brauchwasserversorgungsmenge mit einer gewünschten hohen, tiefen oder mittleren Temperatur in der entsprechenden Auslassleitung (21(a), 32, 42) zu leiten, wobei ein Versorgungskreislauf (22, 23), der Wasser mit einer mittleren Temperatur leitet, dazu eingerichtet ist, die Ströme mit einer hohen Temperatur und einer tiefen Temperatur zu mischen; und
    eine Steuerung, die dazu konfiguriert ist, das System zu steuern, wobei die Steuerung dazu konfiguriert ist, den Warmwasserbereiter (6, 7) und das Mischen in Echtzeit zu steuern, **dadurch gekennzeichnet, dass** das System eine Pumpe in der Hochtemperatur-Leitung (9) zum Leiten von Wasser mit einer hohen Temperatur in die Versorgungskreisläufe (20) umfasst und die Steuerung dazu konfiguriert ist, die Pumpe in Abhängigkeit von einem erfassten Druck zwischen der Pumpe und den Versorgungskreisläufen (20) zu steuern, mindestens ein Versorgungskreislauf der Versorgungskreisläufe (22, 23) eine Tieftemperatur-Leitungspumpe in der Tieftemperatur-Leitung (50, 60) umfasst und die Steuerung dazu konfiguriert ist, die Tieftemperatur-Leitungspumpe in Abhängigkeit von einer erfassten Temperatur in der Versorgungskreislauf-Auslassleitung (32, 42) zu steuern, um einen gewünschten Mischungsgrad zu erzielen, und die Steuerung dazu konfiguriert ist, die Tieftemperatur-Leitungspumpe so zu steuern, dass das Mischen von Wasser aus der Hochtemperatur-Leitung (9), der Tieftemperatur-Leitung (50, 60) und einer Rücklaufleitung (43) dynamisch gesteuert wird, um Brauchwasser bereitzustellen, der Hochtemperatur-Warmwasserbereiter eine Gasturbine (7) und einen Abgaswärmetauscher (6) umfasst, wobei der Wärmetauscher dazu eingerichtet ist, in den Hochtemperatur-Speichertank (8) zu leitendes Wasser zu erwärmen, die Turbine (7) dazu eingerichtet ist, elektrische Energie für die Wärmepumpe (4) entweder direkt oder indirekt bereitzustellen, wobei erzeugter Überschussstrom für einen Prozess bereitgestellt wird.

2. Energiesystem nach Anspruch 1, wobei der mindestens eine Versorgungskreislauf der Versorgungskreisläufe (22, 23) die Rücklaufleitung (43) umfasst.

3. Energiesystem nach Anspruch 1 oder Anspruch 2, wobei mindestens ein Versorgungskreislauf (21) Wasser nur aus der Hochtemperatur-Leitung (9) aufnimmt.

4. Energiesystem nach Anspruch 3, wobei der mindestens eine Versorgungskreislauf (21) einen Temperatursensor (24) in seinem Auslass umfasst und die Steuerung dazu konfiguriert ist, den Hochtemperatur-Warmwasserbereiter (7, 6) in Abhängigkeit von einer durch den Kreislauf erfassten Temperatur zu steuern.

5. Energiesystem nach einem der vorhergehenden Ansprüche, wobei das System einen Wärmerückgewinnungswärmetauscher (3) umfasst, der dazu eingerichtet ist, Wärme aus einer externen Prozessanlage zurückzugewinnen.

6. Energiesystem nach Anspruch 5, wobei der Wärmerückgewinnungswärmetauscher (3) dazu eingerichtet ist, eine Kaltwasserversorgungsmenge auf einen der Wärmepumpe (4) bereitgestellten höheren Temperaturpegel zu erwärmen, sodass die Wärmepumpe bei einem Verdichtungsverhältnis betrieben werden kann, das niedriger ist, als wenn sie die Kaltwasserversorgungsmenge aufnähme.

7. Energiesystem nach Anspruch 6, wobei die Wärmepumpe (4) dazu eingerichtet ist, Wasser zum Einlass des Wärmerückgewinnungswärmetauschers (3) zurückzuleiten.

8. Energiesystem nach einem der vorhergehenden Ansprüche, wobei eine geregelte Ausgangstemperatur aus der Wärmepumpe (4) nach unten regelbar ist, um die Leistungszahl COP der Wärmepumpe zu erhöhen.

9. Verfahren zum Betrieb eines Energiesystems nach einem der vorhergehenden Ansprüche, wobei das Verfahren die folgenden Schritte umfasst:

durch den Hochtemperatur-Warmwasserbereiter (6, 7) und den Hochtemperatur-Speichertank (8) Leiten von Warmwasser über die Hochtemperatur-Leitung (9),
durch die Wärmepumpe (4) und den Tieftemperatur-Speichertank (5) Leiten von Wasser mit einer tieferen Temperatur über die Tieftemperatur-Leitung (50, 60),
durch jeden der Warmwasserversorgungskreisläufe (20) Aufnehmen von Wasser mit einer hohen Temperatur aus der Hochtemperatur-Leitung, Aufnehmen von Wasser mit einer tiefen Temperatur aus der Tieftemperatur-Leitung und Leiten (21(a), 32, 42) einer Brauchwasserversorgungsmenge mit einer gewünschten hohen, tiefen oder mittleren Temperatur in einer entsprechenden Auslassleitung, wobei ein Versorgungskreislauf (22, 23) Wasser mit einer mittleren Temperatur durch Mischen der Ströme mit einer hohen Temperatur und einer tiefen Temperatur leitet.

10. Verfahren nach Anspruch 9, wobei das System einen Wärmerückgewinnungswärmetauscher (3) umfasst, der Wärme aus einer externen Prozessanlage zurückgewinnt, um eine Kaltwasserversorgungsmenge (2) auf einen der Wärmepumpe (4) bereitgestellten höheren Temperaturpegel zu erwärmen, sodass die Wärmepumpe bei einem Verdichtungsverhältnis betrieben wird, das niedriger ist, als wenn sie die Kaltwasserversorgungsmenge aufnähme.

11. Verfahren nach Anspruch 10, wobei die Wärmepumpe (4) Wasser zum Einlass des Wärmerückgewinnungswärmetauschers (3) zurückleitet.

12. Verfahren nach einem der Ansprüche 9 bis 11, wobei eine geregelte Ausgangstemperatur aus der Wärmepumpe (4) nach unten geregelt wird, um die Leistungszahl COP der Wärmepumpe zu erhöhen.

**Revendications**

1. Système d'énergie, comportant :

   une conduite à haute température (9), un chauffe-eau à haute température (6, 7) et un réservoir de stockage à haute température (8) agencés de manière à fournir de l'eau chaude sur la conduite à haute température (9),
   une conduite à basse température (50, 60), une pompe à chaleur (4) et un réservoir de stockage à basse température (5) agencés de manière à fournir de l'eau à plus basse température sur la conduite à basse température (50, 60),
   une pluralité de circuits d'alimentation en eau chaude (20) comportant chacun une conduite de sortie correspondante (21a, 32, 42) et agencés chacun pour

   recevoir l'eau à haute température en provenance de la conduite à haute température (9),
   recevoir de l'eau à basse température en provenance de la conduite à basse température (50, 60), et
   fournir une alimentation en eau de traitement à une température élevée, basse ou intermédiaire souhaitée dans ladite conduite de sortie correspondante (21(a), 32, 42), dans laquelle un circuit d'alimentation (22, 23) fournissant de l'eau à une température intermédiaire est agencé pour mélanger les flux à haute température et à basse température ; et

   un dispositif de commande configuré pour commander le système, dans lequel le dispositif de commande est configuré pour commander le chauffe-eau (6, 7) ainsi que le mélange en temps réel,
   **caractérisé en ce que** :

   le système comporte une pompe dans la conduite à haute température (9) pour fournir de l'eau à haute température aux circuits d'alimentation (20), et le dispositif de commande est configuré pour commander ladite pompe en fonction de la pression détectée entre ladite pompe et les circuits d'alimentation (20),
   au moins un circuit d'alimentation desdits circuits d'alimentation (22, 23) comporte une pompe de conduite à basse température dans ladite conduite à basse température (50, 60), et le dispositif de commande est configuré pour commander ladite pompe de conduite à basse température en fonction de la température détectée dans la conduite de sortie du circuit d'alimentation (32, 42) pour obtenir un niveau de mélange souhaité, et le dispositif de commande est configuré pour commander la pompe de conduite à basse température pour commander dynamiquement le mélange de l'eau en provenance de la conduite à haute température (9), de la conduite à basse température (50, 60) et d'une conduite de retour (43) pour fournir de l'eau de traitement,
   le chauffe-eau à haute température comporte une turbine à gaz (7) et un échangeur de chaleur de gaz de combustion (6), ledit échangeur de chaleur étant agencé pour chauffer l'eau à acheminer jusque dans le réservoir de stockage à haute température (8),
   la turbine (7) est agencée pour fournir de l'énergie électrique pour la pompe à chaleur (4), directement ou indirectement, l'électricité produite en surplus étant fournie pour un processus.

2. Système d'énergie selon la revendication 1, dans lequel ledit au moins un circuit d'alimentation desdits circuits d'alimentation (22, 23) comporte ladite conduite de retour (43).

3. Système d'énergie selon la revendication 1 ou la revendication 2, dans lequel au moins un circuit d'alimentation (21) reçoit de l'eau uniquement en provenance de la conduite à haute température (9).

4. Système d'énergie selon la revendication 3, dans lequel ledit au moins un circuit d'alimentation (21) comporte un capteur de température (24) dans sa sortie, et le dispositif de commande est configuré pour commander le chauffe-eau à haute température (7, 6) en fonction de la température détectée par ledit circuit.

5. Système d'énergie selon l'une quelconque des revendications précédentes, dans lequel le système comporte un échangeur de chaleur de récupération de chaleur (3) agencé pour récupérer de la chaleur en provenance d'un équipement de traitement externe.

6. Système d'énergie selon la revendication 5, dans lequel l'échangeur de chaleur de récupération de chaleur (3) est agencé pour chauffer une alimentation en eau froide à un niveau de température plus élevé fourni à la pompe à chaleur (4), de telle sorte que la pompe à chaleur peut fonctionner à un taux de compression inférieur par rapport à un cas de figure dans lequel elle recevrait l'alimentation en eau froide.

**7.** Système d'énergie selon la revendication 6, dans lequel la pompe à chaleur (4) est agencée pour renvoyer de l'eau à l'entrée de l'échangeur de chaleur de récupération de chaleur (3).

**8.** Système d'énergie selon l'une quelconque des revendications précédentes, dans lequel une température de sortie commandée en provenance de la pompe à chaleur (4) est réglable vers le bas pour augmenter le coefficient de performance COP de la pompe à chaleur.

**9.** Procédé de fonctionnement d'un système d'énergie selon l'une quelconque des revendications précédentes, le procédé comportant les étapes suivantes :

le chauffe-eau à haute température (6, 7) et le réservoir de stockage à haute température (8) fournissent de l'eau chaude sur la conduite à haute température (9),
la pompe à chaleur (4) et le réservoir de stockage à basse température (5) fournissent de l'eau à plus basse température sur la conduite à basse température (50, 60),
chacun des circuits d'alimentation en eau chaude (20) :

reçoit de l'eau à haute température en provenance de la conduite à haute température,
reçoit de l'eau à basse température en provenance de la conduite à basse température, et
fournit (21(a), 32, 42) une alimentation en eau de traitement à une température élevée, basse ou intermédiaire souhaitée dans une conduite de sortie correspondante, dans laquelle un circuit d'alimentation (22, 23) fournit de l'eau à une température intermédiaire en mélangeant les flux à haute température et à basse température.

**10.** Procédé selon la revendication 9, dans lequel le système comporte un échangeur de chaleur de récupération de chaleur (3) qui récupère de la chaleur en provenance d'un équipement de traitement externe pour chauffer une alimentation en eau froide (2) à un niveau de température plus élevé fourni à la pompe à chaleur (4), de telle sorte que la pompe à chaleur fonctionne à un taux de compression inférieur par rapport à un cas de figure dans lequel elle recevrait l'alimentation en eau froide.

**11.** Procédé selon la revendication 10, dans lequel la pompe à chaleur (4) renvoie de l'eau à l'entrée de l'échangeur de chaleur de récupération de chaleur (3).

**12.** Procédé selon l'une quelconque des revendications 9 à 11, dans lequel une température de sortie commandée en provenance de la pompe à chaleur (4) est réglable vers le bas pour augmenter le coefficient de performance COP de la pompe à chaleur.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012086033 A
- DE 19740398
- AT 507709